# EUROPEAN PATENT SPECIFICATION

(11) **EP 1 893 445 B1**
(45) Date of publication and mention of the grant of the patent: **07.03.2012**
(21) Application number: 06747821.4
(22) Date of filing: 30.05.2006
(51) Int. Cl.: B60R 9/045, B60R 9/058

(54) **LOAD CARRIER FOOT FOR FASTENING OF A LOAD CARRIER**
LASTTRÄGERFUSS ZUR BEFESTIGUNG EINES LASTTRÄGERS
PATTE DE FIXATION D'UN PORTE-CHARGE

(30) Priority: 01.06.2005 SE 0501258; 07.11.2005 SE 0502457
(43) Date of publication of application: 05.03.2008
(73) Proprietor: Thule Sweden AB, 330 33 Hillerstorp (SE)
(72) Inventor: LINDELL, Morgan, S-331 35 Värnamo (SE)
(86) International application number: PCT/SE2006/000627
(87) International publication number: WO 2006/130078

(56) References cited:
- EP-A2- 1 612 105
- WO-A1-94/21490
- WO-A1-96/24509
- WO-A1-97/11864
- SE-C2- 522 739

## Description

### Technical field

The present invention refers to a load carrier foot for fastening of a load carrier at a roof rail of a vehicle, comprising two clamping jaws arranged with an initial distance between each other which is larger than the width of the roof rails, whereby the load carrier foot may be locate essentially freely on the roof rail with the clamping jaws arranged on an opposite inside and outside of the roof rail, and a clamping means, which is arranged to move the clamping jaws against each other in such way that the load carrier foot being firmly clamped at the roof rail.

### State of the art

A load carrier of introductory described kind is previously known through, for example WO96/24509 and EP0689510, which shows wedge-shaped clamping jaws, which by aid of a clamping means being moved against each other for clamping around a roof rail. The previously known clamping jaws are initially freely movable along the load carrier bar and it may consequently become difficult for a user to get these in right position in relation to the roof rails at assembly of the load carrier. At modem roof rails, so called "flush rails", which are relatively low and lying close to the roof of the vehicle it may be difficult to get sufficient height on the clamping jaws, so that the load carrier bar passing freely from the arched roof of the vehicle, and to get sufficient clamping force, since the clamping take place in the upper part of the clamping jaws. Furthermore, it is costly to adopt the clamping jaws to a specific profile of the roof rail.

### Problem

The problem with a load carrier of known kind is that it may become difficult to adjust the load carrier, in such way that the load carrier foot grasp around respective roof rail at each end of the load carrier bar.

### Solution

The purpose with the present invention is to simplify correct placing of the load carrier in angle against the roof rail of the vehicle and at a low cost, the possibility to adopt the clamping jaws to different profiles of roof rails, and to increase the strength of the fastening without increased risk of crushing the rail.

The present invention overcomes the above mentioned disadvantages with a load carrier foot of introductory mentioned kind which characterised in that the clamping jaws are designed of a plate material, that the clamping jaws are elastic relatively each other and that the respectively clamping jaw shows a gripping surface adopted to the roof rail.

### Brief description of the figures

A load carrier foot according to the present invention shall hereafter be described with reference to the enclosed figures, in which:
Figure 1 is a schematic side view of a load carrier foot according to the present invention.
Figure 2 is a schematic side view of an alternative load carrier foot.
Figure 3 is a schematic view in perspective of the load carrier foot in figure 2.

### Preferred embodiment

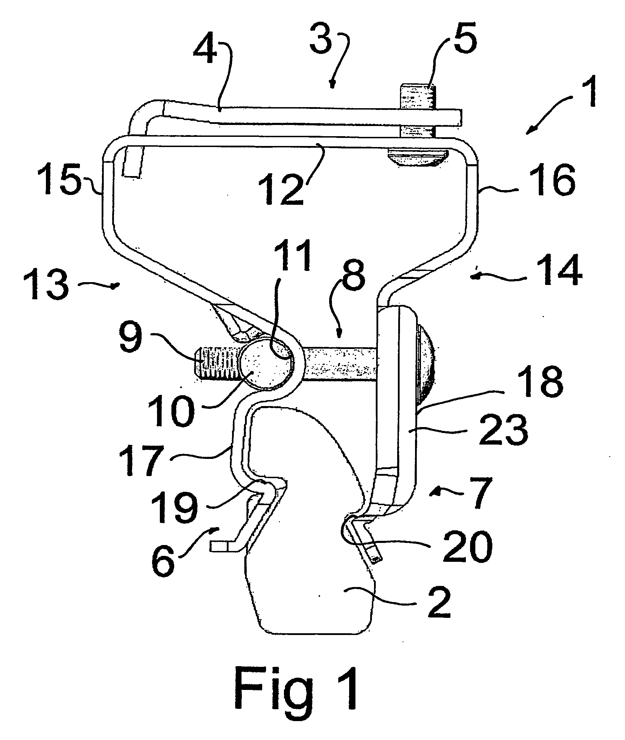

The load carrier foot 1, shown in figure 1 to 3, is intended for fastening of a load carrier (not shown) at a fixed roof rail 2 of a vehicle (not shown). In the figures only one load carrier foot 1 being shown and to clearly illustrate the invention it is shown without any covering casing. A load carrier comprises, as is commonly known, a load carrier bar (not shown) which extends across the roof of the vehicle, between two along the roof of the vehicle firmly arranged roof rails 2, with one in each end arranged load carrier foot 1, for fastening of the load carrier at two essential parallel roof rails 2. Naturally, the load carrier bar may have an optional cross section, for example, a square profile or an oval profile.

The load carrier foot 1 comprises a bent sheet, preferably of metal, which is fastened at the load carrier bar, with an in itself known fastening device 3 comprising a locking plate 4 and a bolt 5. The locking plate 4 is intended, in itself known manner, to be urged into a corresponding opening in the load carrier bar and, by aid of the bolt 5, to clamp the load carrier bar firmly between the locking plate 4 and the load carrier foot 1. The load carrier foot 1 is movable along the opening in the load carrier bar and fixable in right position in relation to the essential parallel rails 2. The load carrier foot comprising two clamping jaws 6 and 7 arranged with an initial distance between each other which is larger than the width of the roof rails, whereby the load carrier foot 1 essentially freely may be located on the roof rail 2 with the clamping jaws arranged on an opposite inside and outside of the roof rail. The load carrier foot 1 comprises also a clamping means 8, which is arranged to move the clamping jaws against each other in such way that the load carrier foot 1 is firmly clamped at the roof rail 2.

The clamping means 8 comprises in the shown embodiment a bolt 9, which extends through an opening in the clamping jaws 6 and 7, to a threaded hole in an axle 10, which is located in a groove 11 in the clamping jaw 6. At clamping of the bolt 9, the axle 10 and the elastic clamping jaws 6 and 7 are moved in direction against each other. The clamping means 8 are preferably arranged in the lower part of the load carrier foot, whereby the clamping force acting close to the roof rail 2. Naturally, the clamping means 8 may also consist of an eccentric clamping coupling or other known bayonet coupling.

The clamping jaws 6 and 7 are designed, according to the present invention, in one piece of a plate material, with relatively high coefficient of elasticity. Thus, the load carrier foot 1 is designed as a bracket with the clamping jaws arranged elastic relatively each other. The load carrier foot 1 extends along the roof rail 2 and comprising a essentially horizontal upper portion 12, which having a width which exceed the width of the roof rail 2 and showing means 3 for fastening of the upper portion 12 to the load carrier.

The load carrier foot 1 also comprises two vertically portions 13 and 14, which having an upper section 15 respectively 16 with elastic property, i.e. showing a high coefficient of elasticity. Preferable, the upper sections 15 respectively 16, are at least partly, arranged inclined against the clamping means 8, which admit a better distribution of power in the load carrier foot 1. Preferably, the upper sections 15 respectively 16 are made of a flat metal sheet, i.e. a metal sheet without any embossing or similar, which obstructing its elastic properties.

The load carrier foot 1 comprises also a lower bent section 17 respectively 18, with relatively rigid properties, which having one to each side of the roof rail 2 adopted gripping surface 19 and 20. The gripping surfaces 19 and 20 extend along with the roof rail 1. The clamping means 8 are thus placed between the upper section 15 and 16, respectively, and the lower section 17 and 18, respectively. At clamping of the clamping means 8, the upper sections 15 and 16 will thus spring against each other and the upper portion 12 will be bent upwards against the load carrier bar and the locking plate 4. Hereby, it would be possible to arranged the locking plate 4 on a fixed distance from the upper portion 12 and still admit that the load carrier foot 1 may be moved along the load carrier bar in an unloaded condition, whereupon the portions being fasten relatively each other at clamping of the clamping means 8, since the load carrier bar will wedge firmly between the locking plate 4 and the upwards bent upper portion 12.

One or several guiding shoulders 21 of the roof rail 2 is arranged to fall into a corresponding recess 22, during assembly, of at least one of the clamping jaw 6 for locking the clamping jaw 6 and the roof rail 2 relatively each other at clamping of the clamping means 8.

The lower section 17 and 18, respectively, may preferably comprise a reinforcement to increase its stiffness, as appear for example by the bent side edge 23.

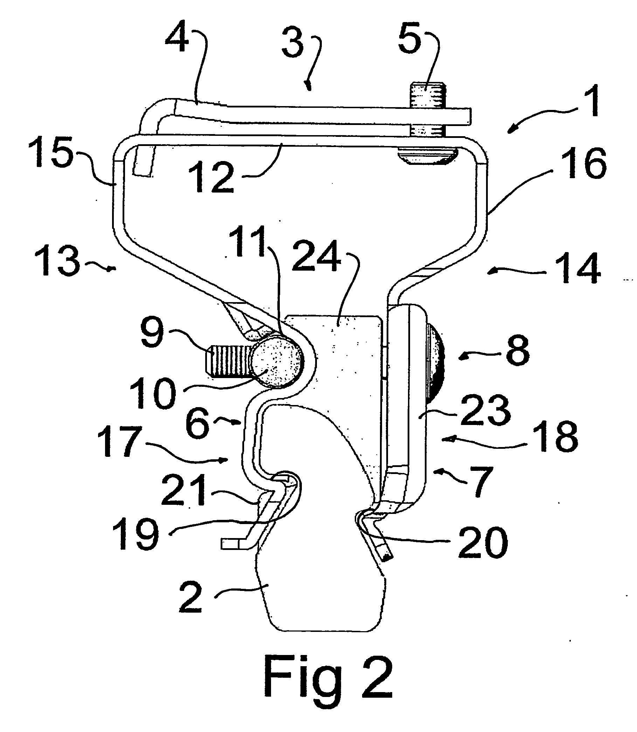

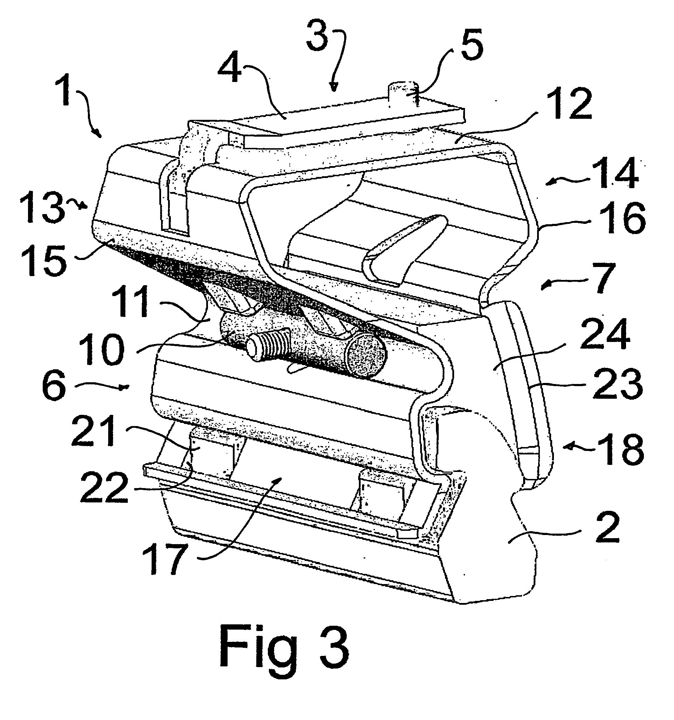

As appear from figure 2 and 3, alternately a relatively fixed body 24 may be arranged between the elastic clamping jaws 6 and 7, which at assembly rests against said roof rail 2 and against which fixed body 24 at least one of the elastic clamping jaws 6 and 7 being moved to abutment at operating of said clamping means 8. The fixed body may be formed of rubber, plastic or similar material and prevent a far too hard clamping of the clamping jaws.

With the present invention is easy to adopt the clamping jaws 6 and 7 to different roof rails 2 through a simple bending of the plate. It is also easy to adopt the height of the load carrier foot 1 by extending or reducing the height of the upper section 15 and 16.

## Claims

1. Load carrier foot (1) for fastening of a load carrier at a roof rail (2) of a vehicle, comprising two clamping jaws (6,7) arranged with an initial distance between each other which is larger than the width of the roof rails, whereby the load carrier foot (1) may be located essentially freely on the roof rail (2) with the clamping jaws (6,7) arranged on an opposite inside and outside of the roof rail (2), and a clamping means (8), which is arranged to move the clamping jaws (6,7) against each other in such way that the load carrier foot (1) being firmly clamped at the roof rail, **CHARACTERISED in that** the clamping jaws (6,7) are designed of a plate material, that the clamping jaws (6,7) are elastic relatively each other and that the respective clamping jaw shows a gripping surface (19,20) adapted the roof rail (2).

2. Load carrier foot according to claim 1, **CHARACTERISED in that** the clamping jaws (6,7) are designed in one piece, which extends along the roof rail (2) and comprising an essential horizontal upper portion (12), which having a width which exceed the width of the roof rail (2) and showing means (3) for fastening of the upper portion (12) to the load carrier, and two vertically portions (13,14), which showing an upper section (15, 16) with elastic property and an lower bent section (17,18) with relatively rigid property, which forming said gripping surface (19,20).

3. Load carrier foot according to claim 2, **CHARACTERISED in that** said clamping means (8) is located between the upper section (15,16) and the lower section (17,18) of respectively vertically portions (13,14).

4. Load carrier foot according to claim 3, **CHARACTERISED in that** at least one guiding shoulder (21) of the roof rail (2), during assembly, is arranged to fall into a recess (22) of at least one bent section (17) for locking the clamping jaw (6) and the roof rail (2) relatively each other at clamping of the clamping means (8).

5. Load carrier foot according to claim 4, **CHARACTERISED in that** a fixed body (24) arranged between the elastic clamping jaws (6,7), which at assembly rest against said roof rail (2), and against which fixed body (24) at least one of the elastic clamping jaws (6,7) being moved to abutment at operating of said clamping means (8).

6. Load carrier foot according to claim 5, **CHARACTERISED in that** the load carrier foot (1) is being movable along a load carrier bar and fixable in right position in relation to the roof rails (2).

## Patentansprüche

1. Lastträgerfuß (1) zum Befestigen eines Lastträgers an einer Dachschiene (2) eines Fahrzeugs, der zwei Klemmbacken (6, 7) aufweist, die in einer ursprünglichen Entfernung zueinander angeordnet sind, die größer ist als die Breite der Dachschienen, wobei der Lastträgerfuß (1) im Wesentlichen frei auf der Dachschiene (2) liegen kann, wobei die Klemmbacken (6, 7) auf einer entgegengesetzten Innenseite und Außenseite der Dachschiene (2) angeordnet sind und eine Klemmeinrichtung (8), die eingerichtet ist, um die Klemmbacken (6, 7) derart gegeneinander zu bewegen, dass der Lastträgerfuß (1) fest an die Dachschiene geklemmt wird, **dadurch gekennzeichnet, dass** die Klemmbacken (6, 7) aus einem Plattenmaterial konzipiert sind, dass die Klemmbacken (6, 7) zueinander elastisch sind, und dass die jeweilige Klemmbacke eine Greiffläche (19, 20) aufweist, die an die Dachschiene (2) angepasst ist.

2. Lastträgerfuß nach Anspruch 1, **dadurch gekennzeichnet, dass** die Klemmbacken (6, 7) aus einem Stück konzipiert sind, das sich entlang der Dachschiene (2) erstreckt und einen wesentlichen horizontalen oberen Abschnitt (12) aufweist, der eine Breite hat, die die Breite der Dachschiene (2) überschreitet, und Einrichtungen (3) zum Befestigen des oberen Abschnitts (12) an dem Lastträger aufweist, sowie zwei vertikale Abschnitte (13, 14), die einen oberen Abschnitt (15, 16) mit elastischer Eigenschaft und einen unteren gebogenen Abschnitt (17, 18) mit einer relativ starren Eigenschaft aufweisen, die die Greiffläche (19, 20) bilden.

3. Lastträgerfuß nach Anspruch 2, **dadurch gekennzeichnet, dass** sich die Klemmeinrichtung (8) zwischen dem oberen Abschnitt (15, 16) und dem unteren Abschnitt (17, 18) der jeweiligen vertikalen Abschnitte (13, 14) befindet.

4. Lastträgerfuß nach Anspruch 3, **dadurch gekennzeichnet, dass** mindestens eine Führungsschulter (21) der Dachschiene (2) eingerichtet ist, um während des Zusammenbauens in eine Vertiefung (22) mindestens eines gebogenen Abschnitts (17) zu fallen, um die Klemmbacke (6) und die Dachschiene (2) relativ zueinander beim Klemmen der Klemmeinrichtung (8) zu verriegeln.

5. Lastträgerfuß nach Anspruch 4, **dadurch gekennzeichnet, dass** ein stationärer Körper (24), der zwischen den elastischen Klemmbacken (6, 7) eingerichtet ist, die beim Zusammenfügen an der Dachschiene (2) ruhen und gegen welchen stationären Körper (24) mindestens eine der elastischen Klemmbacken (6, 7) beim Betätigen der Klemmeinrichtung (8) bis zum Anschlag bewegt wird.

6. Lastträgerfuß nach Anspruch 5, **dadurch gekennzeichnet, dass** der Lastträgerfuß (1) entlang einer Lastträgerstange beweglich und in der richtigen Position in Bezug auf die Dachschienen (2) befestigbar ist.

## Revendications

1. Pied de support de charge (1) pour fixer un support de charge à un rail de toit (2) d'un véhicule, comprenant deux mâchoires de serrage (6, 7) agencées avec une distance initiale entre elles qui est supérieure à la largeur des rails de toit, le pied de support de charge (1) pouvant être situé essentiellement librement sur le rail de toit (2) avec les mâchoires de serrage (6, 7) agencées sur un intérieur et un extérieur opposés du rail de toit (2), et un moyen de serrage (8) qui est agencé de manière à déplacer les mâchoires de serrage (6, 7) l'une contre l'autre de telle sorte que le pied de support de charge (1) soit fermement serré sur le rail de toit, **caractérisé en ce que** les mâchoires de serrage (6, 7) sont conçues en un matériau en plaque, **en ce que** les mâchoires de serrage (6, 7) sont élastiques l'une par rapport à l'autre et **en ce que** la mâchoire de serrage respective présente une surface de prise (19, 20) adaptée au rail de toit (2).

2. Pied de support de toit selon la revendication 1, **caractérisé en ce que** les mâchoires de serrage (6, 7) sont conçues d'une seule pièce, laquelle s'étend le long du rail de toit (2) et comprend une portion supérieure essentiellement horizontale (12), ayant une largeur qui dépasse la largeur du rail de toit (2) et présentant des moyens (3) pour fixer la portion supérieure (12) au support de charge, et deux portions verticales (13, 14) présentant une section supérieure (15, 16) élastique et une section recourbée inférieure (17, 18) relativement rigide, qui forme ladite surface de prise (19, 20).

3. Pied de support de charge selon la revendication 2, **caractérisé en ce que** ledit moyen de serrage (8) est situé entre la section supérieure (15, 16) et la section inférieure (17, 18) de portions verticales respectives (13, 14).

4. Pied de support de charge selon la revendication 3, **caractérisé en ce qu'**au moins un épaulement de guidage (21) du rail de toit (2), au cours de l'assemblage, est agencé de manière à s'insérer dans un retrait (22) d'au moins une section courbe (17) pour verrouiller la mâchoire de serrage (6) et le rail de toit (2) l'un par rapport à l'autre lors du serrage du moyen de serrage (8).

5. Pied de support de charge selon la revendication 4, **caractérisé en ce qu'**un corps fixe (24) est disposé entre les mâchoires de serrage élastiques (6, 7) qui, lors du montage, reposent contre ledit rail de toit (2), contre lequel corps fixe (25) est déplacée en butée au moins l'une des mâchoires de serrage élastiques (6, 7) lors de l'actionnement dudit moyen de serrage (8).

6. Pied de support de charge selon la revendication 5, **caractérisé en ce que** le pied de support de charge (1) est déplaçable le long d'une barre de support de charge et peut être fixé dans une position droite par rapport aux rails de toit (2).
